# FASCICULE DE BREVET EUROPEEN

(11) **EP 2 468 629 B1**
(45) Date de publication et mention de la délivrance du brevet: **23.09.2015**
(21) Numéro de dépôt: 11193536.7
(22) Date de dépôt: 14.12.2011
(51) Int. Cl.: B64G 1/22, B64G 1/66

(54) **Grandes structures rigides déployables**
Entfaltbare starre Großstrukturen
Large extendable rigid structures

(30) Priorité: 23.12.2010 FR 1005093
(43) Date de publication de la demande: 27.06.2012
(73) Titulaire: Thales, 92200 Neuilly Sur Seine (FR); Centre National d'Etudes Spatiales (C.N.E.S.), 75039 Paris Cedex 01 (FR)
(72) Inventeur: Vezain, Stéphane, 06210 Mandelieu (FR); Baudasse, Yannick, 06130 Grasse (FR); Dando, Nicolas, 13640 La Roque D'Antheron (FR); Schreider, Ludovic, 31470 Fonsorbes (FR)
(74) Mandataire: Collet, Alain

(56) Documents cités:
- EP-A1- 0 754 625
- JP-A- 2006 160 064
- JP-A- 2008 221 876
- US-A- 3 326 497

## Description

L'invention se situe dans le domaine des grandes structures déployables et plus particulièrement dans celui des réflecteurs d'antennes radiofréquences pouvant équiper les satellites de télécommunication. Elle concerne une grande structure déployable constituée de panneaux ou de cadres rigides.

Une telle structure est connue de US 3 326 497, qui est considéré comme l'art antérieur le plus proche et décrit les caractéristiques du préambule de la revendication 1.

Les grandes structures déployables constituées de panneaux ou de cadres rigides sont de plus en plus présentes sur tous les satellites. Les missions sont de plus en plus « gourmandes » en énergie car elles embarquent des charges utiles de plus en plus puissantes. Ceci impose des générateurs solaires et des antennes de plus en plus grands. Parmi ces structures, on peut citer les générateurs solaires permettant d'alimenter en énergie électrique l'engin spatial, les réflecteurs d'antenne facettés permettant la réflexion des ondes radiofréquences (RF), les réflecteurs optiques facettés tels que des miroirs, les écrans solaires ou thermiques visant à protéger certains instruments sensibles (par exemple des instruments optiques). Ces structures peuvent être équipées ou non de bras d'éloignement en fonction du besoin de positionnement de l'élément actif de la structure par rapport au satellite pour la mission. En pratique, les dimensions de ces structures sont limitées par le volume disponible sous la coiffe du lanceur permettant de mettre en orbite le satellite. Bien sûr, de telles structures ne peuvent pas être placées en configuration opérationnelle sous la coiffe du lanceur. Par conséquent, une grande structure doit pouvoir être repliée sur elle-même en configuration de stockage pour le lancement, de manière à avoir un volume le plus réduit possible, et pouvoir prendre une configuration déployée en phase opérationnelle, dans laquelle ses dimensions sont plus importantes. Dans cette configuration déployée, il est généralement demandé, afin de rendre possible le pilotage de l'engin spatial, que la grande structure soit la plus rigide et la plus stable possible une fois déployée. D'autre part, ce type de structure est destiné à accomplir certaines fonctions spécifiques liées à la mission. Typiquement, pour un générateur solaire, la face active doit être équipée de cellules solaires. Pour les écrans thermiques et solaires, la surface active doit être la plus homogène en température possible et ce, afin de protéger et de faciliter la régulation thermique des instruments positionnés dans la zone opposée au soleil. Pour les antennes, la surface active doit être dénuée de toute surface ou appendices métalliques afin d'avoir des performances RF optimisées. Dans tous les cas, on cherche à minimiser la présence d'éléments mécaniques en face active.

La présente invention telle que décrite par les caractéristiques de la revendication 1 vise à fournir une structure déployable permettant de répondre à tout ou partie des besoins précités.

L'invention a notamment pour avantages :
▪ qu'elle permet d'obtenir une surface active de forme quelconque à partir de panneaux plats,
▪ qu'elle permet d'obtenir une surface active dénuée d'éléments métalliques tels que des articulations par exemple,
▪ qu'elle permet de garantir une grande stabilité de positionnement.

Selon une forme particulière de réalisation de la structure déployable, les panneaux primaires et secondaires comprennent un cadre rigide recouvert d'au moins un substrat flexible ou d'un panneau formant la surface avant.

L'invention a également pour objet un procédé de déploiement d'une structure déployable [pas revendiqué] pouvant équiper un engin spatial comportant :
▪ un ensemble de panneaux primaires,
▪ un ensemble de panneaux secondaires,
chaque panneau primaire et secondaire comportant une surface avant sensiblement plane et une surface arrière sensiblement plane et parallèle à la surface avant dudit panneau,
la structure déployable pouvant prendre une configuration de stockage dans laquelle la surface arrière de chaque panneau primaire est en vis-à-vis de la surface arrière d'un autre panneau primaire, et dans laquelle la surface arrière de chaque panneau secondaire est en vis-à-vis de la surface arrière d'un autre panneau primaire ou secondaire.
Le procédé de déploiement comporte les étapes suivantes pour déployer la structure déployable à partir de sa configuration de stockage :
▪ faire pivoter, selon un axe primaire, chaque panneau primaire par rapport au panneau primaire dont la surface arrière est en vis-à-vis avec sa surface arrière, les axes primaires étant sensiblement parallèles aux surfaces avant des panneaux primaires,
▪ faire pivoter, selon un axe secondaire, chaque panneau secondaire par rapport au panneau dont la surface arrière est en vis-à-vis avec sa surface arrière, les axes secondaires étant sensiblement parallèles aux surfaces avant des panneaux considérés,
les panneaux primaires et secondaires étant entraînés en rotation jusqu'à une configuration déployée dans laquelle les surfaces avant des panneaux forment globalement une surface sensiblement continue.

L'invention sera mieux comprise et d'autres avantages apparaîtront à la lecture de la description qui va suivre, faite en regard de dessins annexés sur lesquels :
- la figure 1 représente schématiquement un satellite de télécommunication équipé d'un premier exemple de réflecteur parabolique selon l'invention en configuration déployée ;
- la figure 2 représente un deuxième exemple de réflecteur parabolique selon l'invention en configuration déployée ;
- la figure 3 représente schématiquement des panneaux primaires du réflecteur de la figure 1 avec des systèmes d'articulation primaires entre les panneaux primaires ;
- les figures 4A à 4D représentent un exemple de système d'articulation primaire dans différentes positions ;
- les figures 5A à 5D illustrent une première cinématique de déploiement des panneaux primaires ;
- les figures 6A à 6D illustrent une deuxième cinématique de déploiement des panneaux primaires ;
- la figure 7 représente schématiquement un exemple de panneaux reliés par des systèmes d'articulation secondaires ;
- les figures 8A à 8H illustrent un exemple de cinématique de déploiement des panneaux primaires et secondaires du réflecteur de la figure 1 ;
- la figure 9 représente schématiquement le satellite de la figure 1 dans lequel des panneaux du réflecteur sont reliés par des systèmes de verrouillage périphériques ;
- les figures 10A et 10B représentent un exemple de système de verrouillage périphérique entre deux panneaux secondaires en fin de déploiement, et en configuration déployée et verrouillée, respectivement ;
- la figure 11 représente schématiquement un satellite de télécommunication équipé d'un écran thermique selon l'invention en configuration déployée ;
- les figures 12A à 12F illustrent un exemple de cinématique de déploiement des panneaux primaires et secondaires de l'écran thermique de la figure 11.

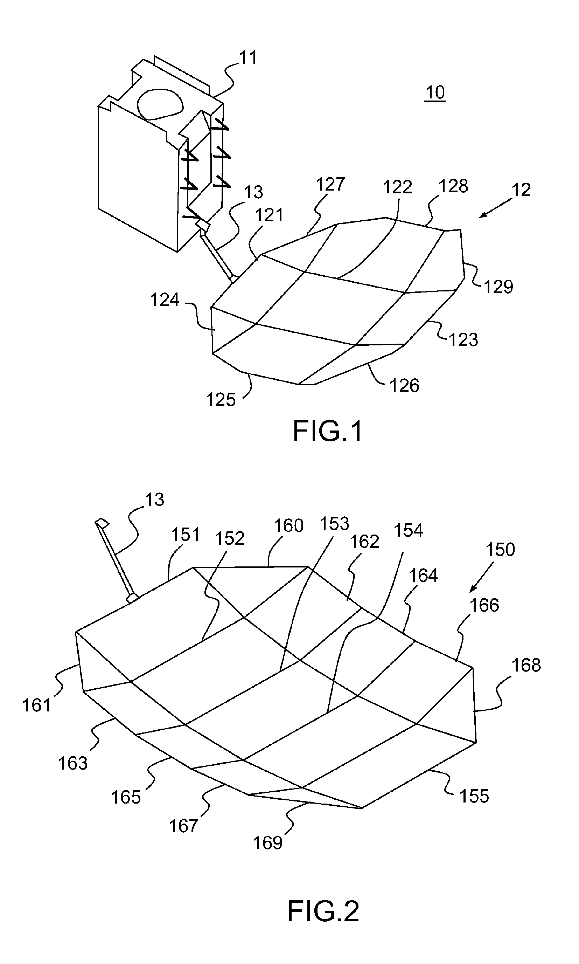

La figure 1 représente schématiquement un satellite de télécommunication équipé d'un premier exemple de réflecteur parabolique en configuration déployée. De manière générale, on considère que la configuration déployée d'une structure déployable telle qu'un réflecteur est la configuration dans laquelle cette structure déployable est opérationnelle. Par opposition, on considère que la configuration de stockage d'une structure déployable est la configuration dans laquelle elle peut être placée sous la coiffe d'un lanceur apte à mettre le satellite en orbite. Le satellite de télécommunication 10 comporte une caisse 11, un réflecteur 12 de forme sensiblement parabolique et un bras 13, par exemple de forme tubulaire, reliant le réflecteur 12 à la caisse 11. Le bras 13 permet notamment de déporter le réflecteur 12 de la caisse 11 lors de son déploiement. Ce bras 13 peut également être constitué d'un panneau similaire à ceux utilisés pour le réflecteur d'antenne 12. Le réflecteur 12 comporte trois panneaux primaires 121, 122 et 123 et six panneaux secondaires 124 à 129. Chaque panneau 121 à 129 comporte une surface réfléchissante sensiblement plane et une surface arrière sensiblement plane et parallèle à la surface réfléchissante. La surface réfléchissante est traitée de manière à pouvoir réfléchir un rayonnement électromagnétique dans une bande de fréquences prédéterminée, choisie en fonction de l'application visée. En configuration déployée, les panneaux primaires 121 à 123 et secondaires 124 à 129 sont agencés de manière à ce que leurs surfaces réfléchissantes forment globalement une surface réfléchissante sensiblement continue et proche d'une surface parabolique de référence. Cette surface réfléchissante est appelée surface réfléchissante globale 12A. Par surface sensiblement continue, on entend le fait que les surfaces réfléchissantes sont contiguës les unes aux autres. Autrement dit, il n'y a pas d'interstices entre les panneaux 121 à 129. En raison de la planéité des surfaces réfléchissantes des panneaux 121 à 129, la surface réfléchissante globale 12A ne peut pas être strictement parabolique. Elle est une surface à facettes. Dans l'exemple de réalisation de la figure 1, la surface réfléchissante de chaque panneau primaire 121 à 123 est rectangulaire. Le panneau primaire 122 est abouté au panneau primaire 121 par l'un de ses côtés et au panneau primaire 123 par le côté opposé. Les panneaux secondaires 125 et 128 sont aboutés au panneau primaire 122 par ses côtés libres, perpendiculaires aux côtés par lesquels sont aboutés les panneaux primaires 121 et 123. Les panneaux secondaires 124 et 127, et 126 et 129, sont respectivement aboutés aux panneaux primaires 121 et 123 par deux côtés opposés de ces panneaux primaires 121 et 123, perpendiculaires au côté par lequel est respectivement abouté le panneau primaire 122. La surface réfléchissante des panneaux secondaires 124 à 129 est formée de manière à ce que la surface réfléchissante globale 12A ait la forme souhaitée. A titre d'exemple, on considère que le réflecteur 12 forme une parabole de 6 mètres de diamètre avec une distance focale de 4,5 mètres. Chaque panneau 121 à 129 est alors incliné d'un angle d'environ 11 °avec un pann eau contigu. La figure 1 ne représente qu'un exemple de réalisation d'un réflecteur selon l'invention. Les panneaux primaires 121 à 123 ne sont pas nécessairement rectangulaires, et le réflecteur 12 peut comporter un plus grand nombre de panneaux. Plus généralement, le réflecteur 12 peut être tel que les côtés des panneaux primaires par lesquels ils sont aboutés entre eux sont sensiblement parallèles entre eux. Les panneaux secondaires sont aboutés aux côtés libres des panneaux primaires. Ils peuvent également être aboutés entre eux, par exemple par des côtés perpendiculaires au côté par lequel l'un de ces panneaux secondaires est abouté au panneau primaire.

La figure 2 représente schématiquement un exemple de réflecteur parabolique de très grande dimension selon l'invention en configuration déployée. Le réflecteur 150 se distingue de celui de la figure 1 en ce qu'il comporte cinq panneaux primaires 151 à 155 et dix panneaux secondaires 160 à 169. En configuration déployée, les panneaux 151-155 et 160-169 sont agencés de manière à ce que leurs surfaces réfléchissantes forment globalement une surface réfléchissante sensiblement continue et proche d'une surface parabolique de référence. Les panneaux primaires 151-155 sont aboutés les uns aux autres par des côtés parallèles entre eux. Les panneaux secondaires 160 et 161 sont aboutés au panneau primaire 151 par les côtés libres de ce panneau, perpendiculaires au côté par lequel le panneau primaire 151 est abouté au panneau primaire 152. Les panneaux secondaires 162 et 163 sont aboutés au panneau primaire 152 par les côtés libres de ce panneau. De la même manière, les panneaux secondaires 164 et 165, 166 et 167, 168 et 169 sont respectivement aboutés de part et d'autre des panneaux primaires 153 à 155 par leurs côtés libres. La surface réfléchissante des panneaux secondaires 160-169 est formée de manière à ce que la surface réfléchissante globale, comprenant la surface réfléchissante des panneaux primaires 151-155, ait la forme souhaitée. Le réflecteur 150 peut être relié à la caisse d'un satellite, non représentée, par le bras 13.

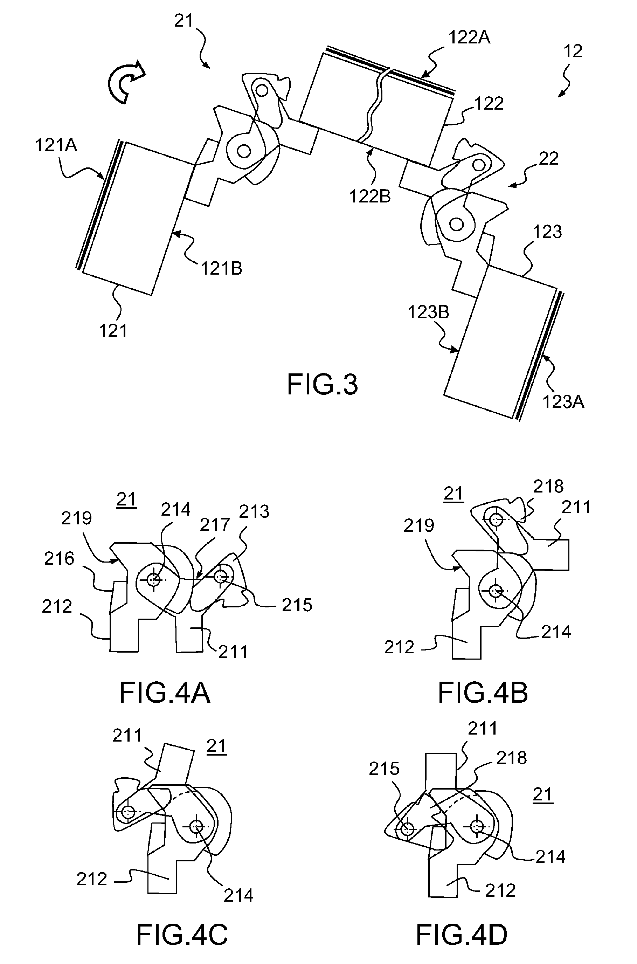

Un réflecteur d'antenne équipant un satellite de télécommunication doit pouvoir passer de la configuration de stockage à la configuration déployée. Dans la configuration de stockage, les panneaux primaires et secondaires sont empilés les uns sur les autres. Dans la configuration déployée, les panneaux sont déployés de manière à former la surface réfléchissante désirée. Afin de permettre le déploiement des panneaux, le réflecteur comporte des systèmes d'articulation entre les panneaux, notamment entre les panneaux primaires. La figure 3 représente schématiquement les panneaux primaires du réflecteur de la figure 1 avec leurs systèmes d'articulation. On qualifie de "primaires" les systèmes d'articulation reliant deux panneaux primaires. Sur la figure 3, les surfaces réfléchissantes des panneaux primaires 121 à 123 sont notées respectivement 121 A, 122A et 123A. Les surfaces arrière sont notées respectivement 121B, 122B et 123B. Le réflecteur 12 comporte deux systèmes d'articulation primaires. Un premier système d'articulation primaire 21 relie les panneaux primaires 121 et 122. Un deuxième système d'articulation primaire 22 relie les panneaux primaires 122 et 123. Chaque système d'articulation primaire 21 ou 22 doit pouvoir faire pivoter un panneau primaire 121 à 123 par rapport à un autre selon un axe sensiblement parallèle aux surfaces 121 A à 123A des panneaux primaires 121 à 123. Les panneaux primaires 121 à 123 peuvent ainsi être empilés parallèlement les uns aux autres en configuration de stockage. En fonction de la longueur des panneaux, notamment lorsque les deux panneaux primaires 121 et 123 sont deux fois moins longs que le panneau primaire 122, il est possible d'empiler les deux panneaux primaires 121 et 123 dans une même épaisseur. Le volume occupé par le réflecteur dans cette configuration est ainsi limité. Les axes de rotation des systèmes d'articulation primaires 21 et 22 peuvent en outre être parallèles entre eux. Ce parallélisme n'est cependant pas essentiel selon l'invention. Selon une forme particulière de réalisation, les systèmes d'articulation 21 et 22 sont fixés aux panneaux primaires 121 à 123 sur leurs surfaces arrière 121 B à 123B. Cette forme particulière de réalisation permet, en configuration déployée, de masquer les systèmes d'articulation 21 et 22 vis-à-vis du rayonnement électromagnétique émis ou reçu par l'antenne, et de former globalement une surface réfléchissante continue. Cette forme particulière de réalisation permet également aux surfaces arrière 121 B et 123B de se retrouver en vis-à-vis de la surface arrière 122B.

Les figures 4A à 4D représentent un exemple de système d'articulation primaire permettant de relier deux panneaux primaires. On considère à titre d'exemple le système d'articulation primaire 21. La figure 3A représente le système d'articulation primaire 21 dans une position correspondant à la configuration de stockage des panneaux primaires 121 et 122 ; les figures 3B et 3C représentent le système d'articulation 21 dans des positions où les panneaux primaires 121 et 122 sont en cours de déploiement l'un par rapport à l'autre ; et la figure 3D représente le système d'articulation primaire 21 dans une position correspondant à la configuration déployée des panneaux primaires 121 et 122. Le système d'articulation primaire 21 comporte une première pièce 211 sur laquelle le panneau primaire 121 est destiné à être monté, une deuxième pièce 212 sur laquelle le panneau primaire 122 est destiné à être monté, et une troisième pièce 213 destinée au verrouillage de l'articulation 21 en configuration déployée. La deuxième pièce 212 est en liaison pivot par rapport à la première pièce 211 selon un premier axe 214. La troisième pièce est en liaison pivot par rapport à la première pièce 211 selon un deuxième axe 215, sensiblement parallèle au premier axe 214. La deuxième pièce 212 comporte une butée fixe 216 apte à venir en appui sur une surface d'appui 217 de la première pièce 211 dans la position correspondant à la configuration déployée des panneaux primaires 121 et 122, comme illustré sur la figure 3D. La butée 216 et la surface d'appui 217 permettent de limiter le mouvement de rotation entre les première et deuxième pièces 211, 212 une fois la position correspondant à la configuration déployée atteinte. La troisième pièce 213 comporte une butée anti-retour 218 apte à venir en appui sur une surface d'appui 219 de la deuxième pièce 212 dans la position correspondant à la configuration déployée des panneaux primaires 121 et 122. La butée anti-retour 218 et la surface d'appui 219 permettent d'empêcher un mouvement de rotation entre les première et deuxième pièces 211, 212 vers la position de stockage une fois la position déployée atteinte. Les systèmes d'articulation primaires assurent ainsi à la fois une fonction de guidage en rotation et une fonction de verrouillage des panneaux primaires. Ils peuvent également assurer une fonction de motorisation consistant à entraîner les panneaux primaires de la configuration de stockage vers la configuration déployée. Le couple d'entraînement est par exemple fourni par un ressort spiral. Le déploiement des panneaux primaires peut être déclenché par un dispositif pyrotechnique connu de l'état de la technique.

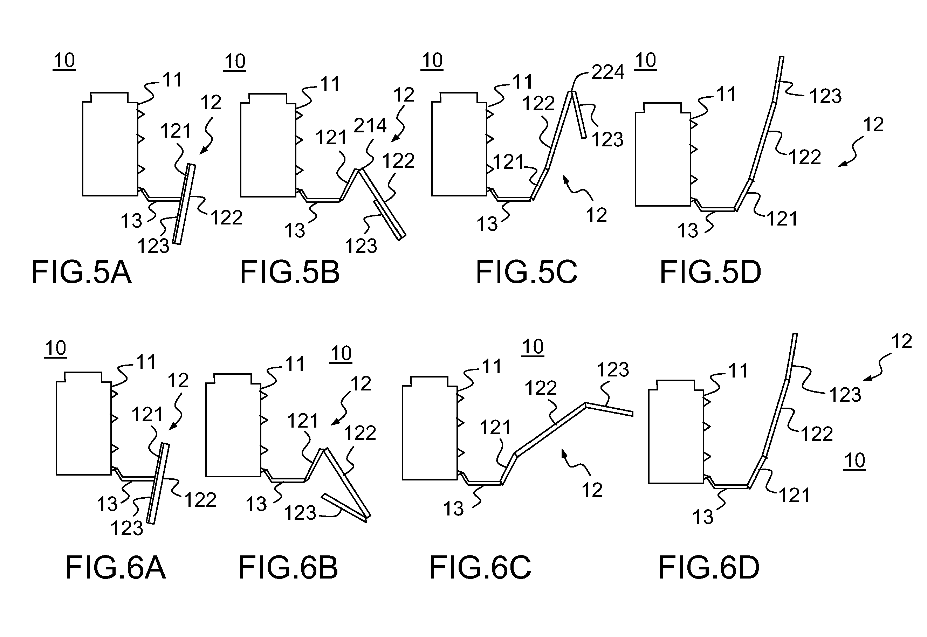

Le déploiement des panneaux, en particulier des panneaux primaires, peut suivre différentes cinématiques. Les figures 5A à 5D illustrent une première cinématique, dite séquencée. La figure 5A représente le satellite 10 lorsque le réflecteur 12 est dans la configuration de stockage. En l'occurrence, les panneaux primaires 121 à 123 sont repliés les uns sur les autres. Dans une première étape, représentée sur la figure 5B, le système d'articulation primaire 21 entraîne en rotation selon l'axe 214 le panneau primaire 122 par rapport au panneau primaire 121 jusqu'à ce qu'ils soient dans la configuration déployée l'un par rapport à l'autre, comme représenté sur la figure 5C. Cette configuration déployée correspond, pour le système d'articulation primaire 21 représenté sur la figure 3, à la position où la butée 216 vient en appui sur la surface d'appui 217 et où la butée anti-retour 218 et la surface d'appui 219 verrouillent la position relative des panneaux primaires 121 et 122. L'atteinte de la configuration déployée du panneau primaire 121 par rapport au panneau primaire 122 déclenche le déploiement du panneau primaire 123 dans une deuxième étape. Le système d'articulation primaire 22 entraîne en rotation selon un axe 224 le panneau primaire 123 par rapport au panneau primaire 122 jusqu'à ce qu'ils soient dans la configuration déployée l'un par rapport à l'autre, comme représenté sur la figure 5D. Cette configuration déployée correspond pour le système d'articulation primaire 22 à la position où la butée du système d'articulation primaire 22 vient en appui sur la surface d'appui correspondante. Le panneau primaire 123 est alors verrouillé dans la configuration déployée.

Les figures 6A à 6D illustrent une deuxième cinématique, dite synchronisée. Les figures 6B et 6C représentent le satellite 10 lorsque le réflecteur 12 est en cours de déploiement. Dans la cinématique synchronisée, les panneaux primaires 121 à 123 sont déployés simultanément par l'intermédiaire d'un réseau de câbles et de poulies liant les différentes articulations entre elles. L'aménagement de poulies de formes et de diamètres différents permet d'obtenir des vitesses et des angles d'ouverture variés. Le système d'articulation primaire 22 entraîne en rotation selon l'axe 224 le panneau primaire 123 par rapport au panneau primaire 122, indépendamment de la position relative du panneau primaire 122 par rapport au panneau primaire 121. De la même manière que dans la cinématique séquencée, chaque panneau primaire 121 à 123 est verrouillé en fin de déploiement, lorsqu'il se trouve dans la configuration déployée. Le verrouillage des panneaux primaires 121 à 123 peut être réalisé par les systèmes d'articulation primaires 21 et 22, comme par exemple décrit précédemment, ou par un autre dispositif de verrouillage, indépendant des systèmes d'articulation primaires.

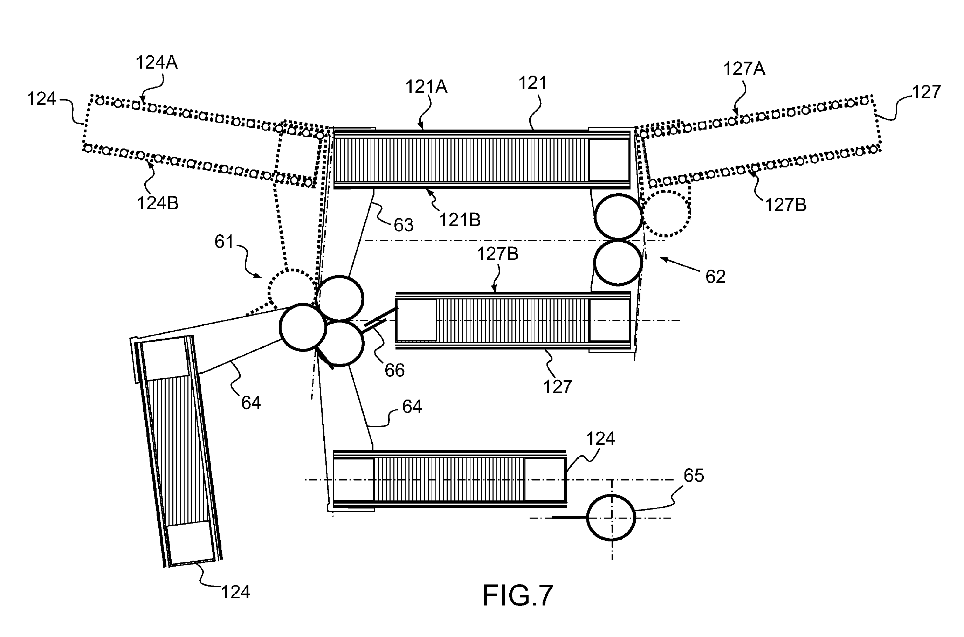

Les panneaux secondaires doivent également pouvoir être déployés pour faire passer le réflecteur 12 de la configuration de stockage à la configuration déployée. A cet effet, le réflecteur 12 comporte des systèmes d'articulation dits secondaires reliant chaque panneau secondaire à un panneau primaire. La figure 7 représente schématiquement un exemple de panneaux reliés par des systèmes d'articulation secondaires permettant l'ouverture séquencée des panneaux secondaires. En effet, les panneaux étant empilés les uns sur les autres, il est nécessaire de pouvoir piloter le déploiement de chaque panneau secondaire indépendamment afin d'éviter toute interférence. On considère à titre d'exemple qu'il s'agit des panneaux 121, 124 et 127 décrits en référence à la figure 1. Les surfaces réfléchissantes des panneaux 124 et 127 sont notées respectivement 124A et 127A. Les surfaces arrière sont notées respectivement 124B et 127B. Un premier système d'articulation secondaire 61 relie le panneau primaire 121 au panneau secondaire 124. Il permet de faire pivoter le panneau secondaire 124 par rapport au panneau primaire 121 selon un axe sensiblement parallèle aux surfaces 121A et 124A des panneaux 121 et 124. Un deuxième système d'articulation secondaire 62 relie le panneau primaire 121 au panneau secondaire 127. Il permet de faire pivoter le panneau secondaire 127 par rapport au panneau primaire 121 selon un axe sensiblement parallèle aux surfaces 121A et 127A des panneaux 121 et 127. Le fait que les axes des systèmes d'articulation secondaires 61, 62 soient sensiblement parallèles aux surfaces 121 A et 124A ou 121 A et 127A permet d'empiler les panneaux parallèlement les uns aux autres en configuration de stockage. Le volume occupé par le réflecteur 12 dans cette configuration est ainsi limité. Les axes des systèmes d'articulation secondaires peuvent être sensiblement orthogonaux aux axes des systèmes d'articulation primaires. Avantageusement, les systèmes d'articulation secondaires 61 et 62 sont fixés aux panneaux 121, 124 et 127 sur leurs surfaces arrière 121 B, 124B et 127B, comme représenté sur la figure 7. Cette forme particulière de réalisation permet, en configuration déployée, de masquer les systèmes d'articulation secondaires 61 et 62 vis-à-vis du rayonnement électromagnétique émis ou reçu par l'antenne, et de former globalement une surface réfléchissante continue. Cette forme particulière de réalisation permet également aux surfaces arrière 124B et 127B des panneaux secondaires 124 et 127 de se retrouver en vis-à-vis de la surface arrière 121 B du panneau primaire 121. Les panneaux secondaires 124 et 127 peuvent être empilés dans un même plan ou, comme dans l'exemple de la figure 7, dans des plans différents. Les panneaux secondaires 124 et 127 peuvent alors avoir chacun des dimensions similaires à celles du panneau primaire 121 sous lequel elles sont empilées en configuration de stockage. Pour ce faire, le réflecteur 12 peut comporter un bras déportant l'un des panneaux secondaires 124 et 127 de manière à ce qu'ils soient empilés dans deux plans parallèles distincts. Dans l'exemple de la figure 7, le réflecteur 12 comporte un premier bras 63 fixé à une extrémité au panneau primaire 121 et à une autre extrémité au système d'articulation secondaire 61, et un deuxième bras 64 fixé à une extrémité au système d'articulation secondaire 61 et à une autre extrémité au panneau secondaire 124. Dans cet exemple, le système d'articulation secondaire 61 peut se trouver à proximité du panneau secondaire 127, de sorte que le déploiement du panneau secondaire 124 puisse déclencher le déploiement du panneau secondaire 127. En particulier, un premier dispositif déclencheur 65 peut être fixé au panneau primaire 121, et plus particulièrement sur la butée anti-retour 218, et disposé de manière à pouvoir libérer sur commande la rotation du panneau secondaire 124 par rapport au panneau primaire 121. Un deuxième dispositif déclencheur 66 peut être fixé au panneau secondaire 124 et disposé de manière à pouvoir libérer la rotation du panneau secondaire 127 par rapport au panneau primaire 121 avec le déploiement du panneau secondaire 124. Les mêmes systèmes d'articulation que ceux décrits en référence à la figure 7 peuvent être utilisés pour l'articulation des panneaux secondaires 125 et 128 par rapport au panneau primaire 122, et des panneaux secondaires 126 et 129 par rapport au panneau primaire 123. Structurellement, les systèmes d'articulation secondaires peuvent être similaires aux systèmes d'articulation primaire. Par ailleurs, le réflecteur faisant l'objet de l'invention peut comporter un plus grand nombre de panneaux secondaires par panneau primaire. En particulier, le réflecteur peut comporter des panneaux secondaires articulés en série sur un ou plusieurs côtés d'un panneau primaire. Certains systèmes d'articulation secondaires relient alors des panneaux secondaires à d'autres panneaux secondaires. Les systèmes d'articulation secondaires peuvent être fixés aux panneaux secondaires de manière à ce que les surfaces arrière de deux panneaux secondaires contigus se trouvent en vis-à-vis dans la configuration de stockage.

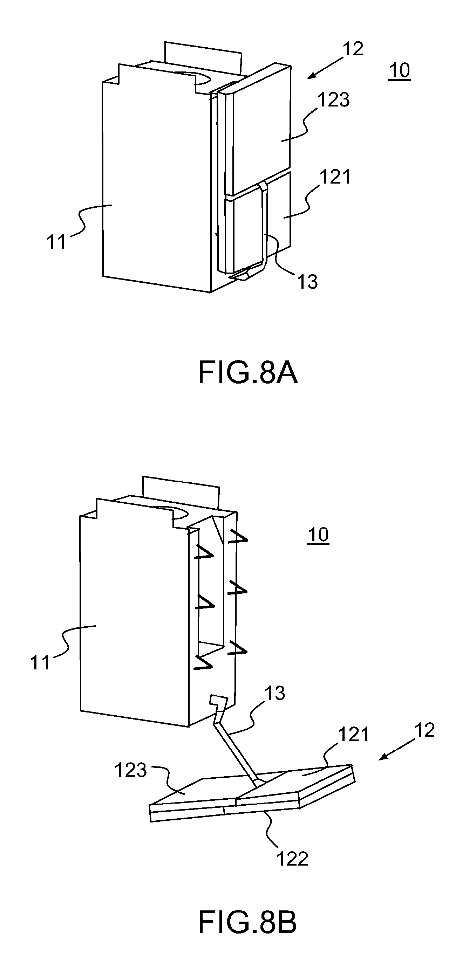

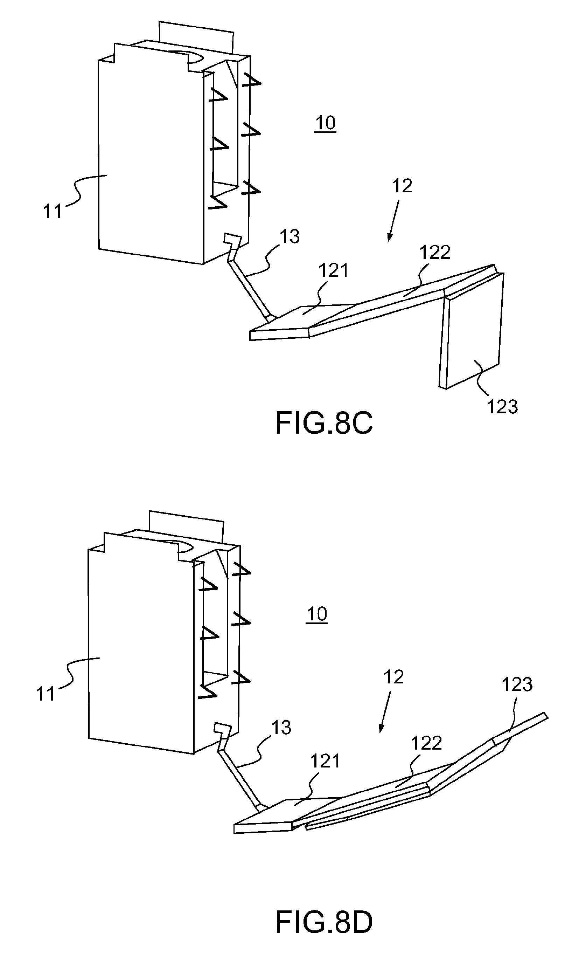

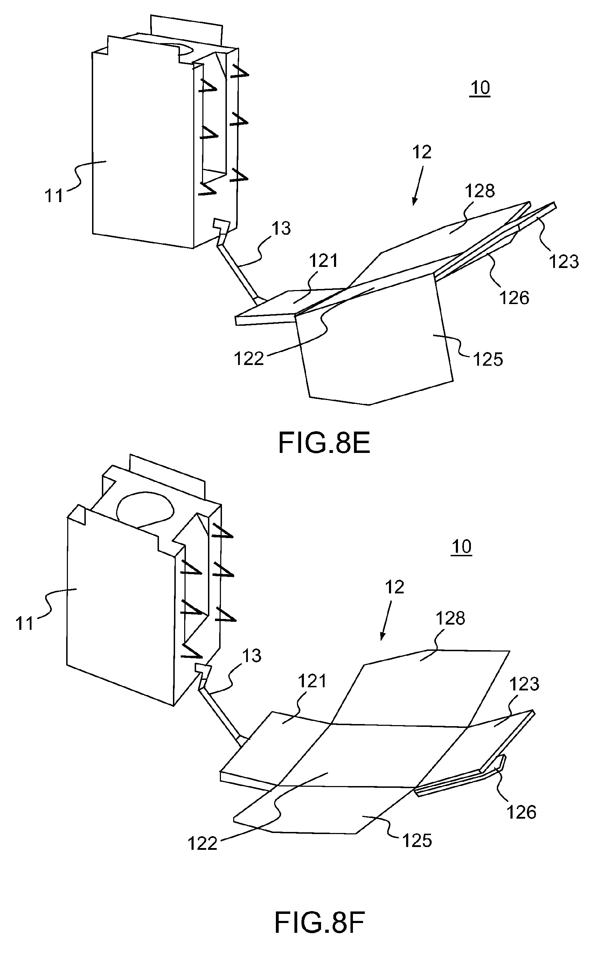

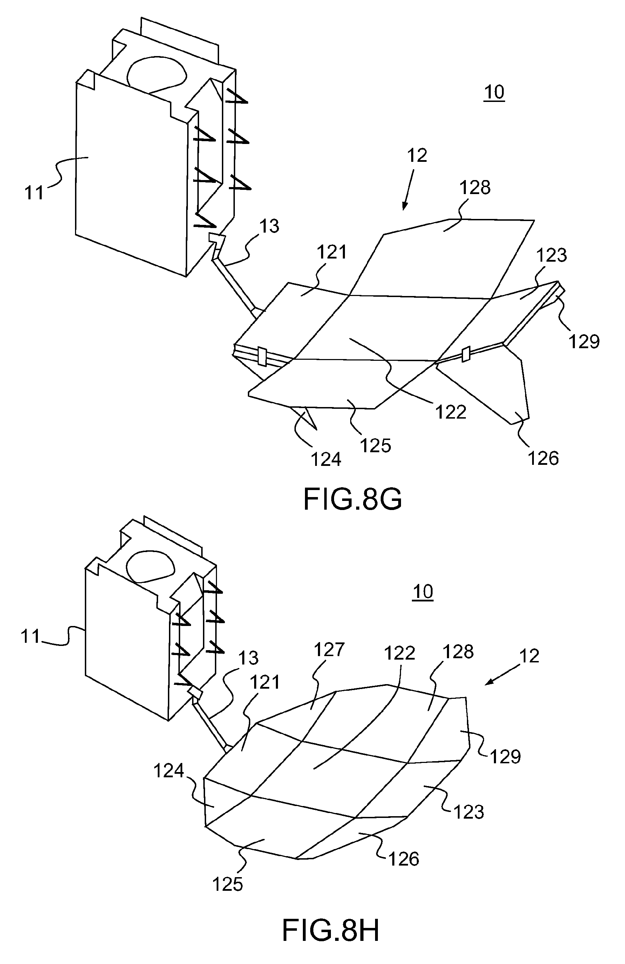

Les figures 8A à 8H illustrent un exemple de cinématique de déploiement des panneaux primaires et secondaires du réflecteur 12 de la figure 1. Sur la figure 8A, le réflecteur 12 est en configuration de stockage, la surface réfléchissante 122A du panneau primaire 122 étant en appui contre une face de la caisse 11 du satellite 10. La figure 8B représente le satellite 10 lors du déploiement du bras tubulaire 13 pour déporter le réflecteur 12 de la caisse 11. Sur la figure 8C, les panneaux primaires 121, 122 et 123 sont en cours de déploiement. Sur la figure 8D, les panneaux primaires 121-123 sont en configuration déployée. Sur la figure 8E, les panneaux secondaires 125 et 128 sont en cours de déploiement par rapport au panneau primaire 122. Sur la figure 8F, les panneaux primaires 121-123 et les panneaux secondaires 125 et 128 sont en configuration déployée. Sur la figure 8G, les panneaux secondaires 124 et 126 sont en cours de déploiement. Sur la figure 8H, le réflecteur 12 est en configuration déployée. D'autres cinématiques de déploiement du réflecteur peuvent être réalisées, dans la mesure où aucun panneau ne s'entrechoque avec un autre lors de son déploiement.

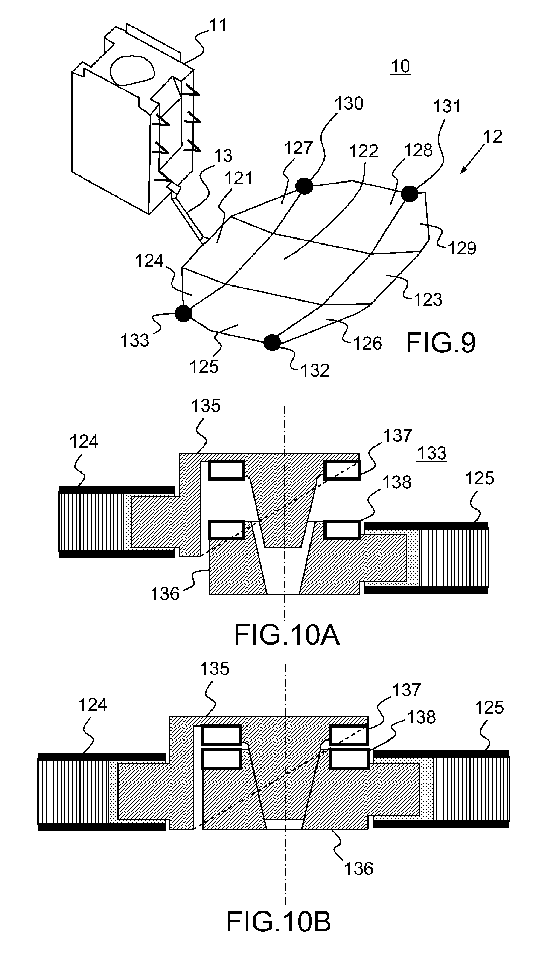

Le réflecteur selon l'invention comporte des dispositifs de verrouillage à la périphérie de la surface réfléchissante globale. Ces dispositifs de verrouillage permettent d'améliorer la stabilité générale du réflecteur. La figure 9 représente le satellite 10 et le réflecteur d'antenne 12 de la figure 1 comportant de tels dispositifs de verrouillage 130, 131, 132 et 133 positionnés à la périphérie du réflecteur d'antenne 12, entre chaque couple de panneaux secondaires contigus. Les dispositifs de verrouillage 130-133 sont aptes à supprimer au moins un degré de liberté entre deux panneaux adjacents, de manière à rigidifier le réflecteur dans la configuration déployée. Dans la mesure où chaque panneau secondaire 124 à 129 est articulé avec l'un des panneaux primaires 121 à 123, et non avec un autre panneau secondaire, chaque dispositif de verrouillage 130 à 133 supprime un degré de liberté entre deux panneaux adjacents non articulés entre eux. Les dispositifs de verrouillage 130 à 133 sont donc indépendants des systèmes d'articulation primaires et secondaires. Afin de limiter le nombre de dispositifs de verrouillages, ceux-ci peuvent avantageusement être remplacés, dans le cas de jointures de panneaux articulées entre les panneaux primaires et secondaires, par des articulations situées dans les coins extérieurs des panneaux, ces articulations ayant une capacité de reprise de charge en configuration déployée.

Les figures 10A et 10B représentent un exemple de réalisation d'un dispositif de verrouillage basé sur un concept d'aimant permanent. A titre d'exemple, la figure 10A représente les panneaux secondaires 124 et 125 en fin de déploiement et la figure 10B représente les panneaux secondaires 124 et 125 en configuration déployée et verrouillée. Le panneau secondaire 124 est équipé d'une ferrure à bout conique mâle 135 et le panneau secondaire 125 est équipé d'une ferrure à bout conique femelle 136. Chacune des deux ferrures est elle-même équipée d'un aimant permanent 137 et 138, respectivement solidaire de chaque ferrure. En fin de déploiement, les systèmes d'articulation permettent aux extrémités des panneaux 124 et 125 de se positionner en vis-à-vis de manière à ce que la ferrure à bout conique mâle 135 vienne s'emboîter dans la ferrure à bout conique femelle 136. Sous l'effet des aimants 137 et 138 et de l'attraction magnétique en résultant, les deux ferrures 135 et 136 viennent en contact et restent ensuite maintenues l'une contre l'autre.

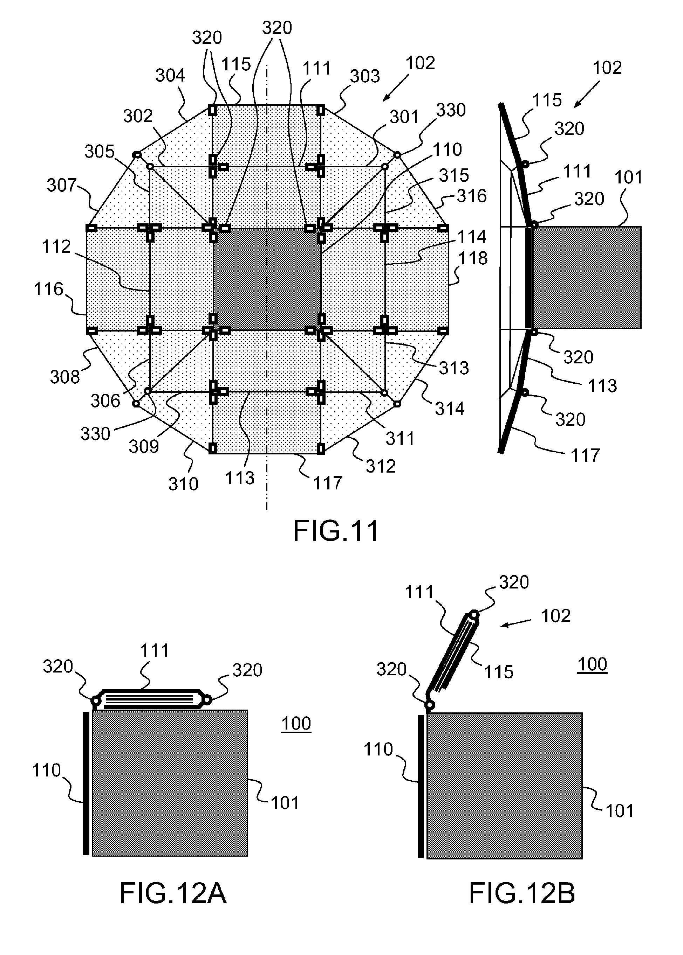

La figure 11 représente schématiquement un satellite de télécommunication équipé d'un écran thermique formé par une structure déployable selon l'invention en configuration déployée. Le satellite 100 comporte une caisse 101 et un écran thermique 102. La caisse 101 présente une face sur laquelle est fixé un panneau central 110 de l'écran thermique 102. Le panneau central 110 présente une forme carrée sur la figure 11, mais il pourrait présenter une forme rectangulaire. Des panneaux primaires 111, 112, 113 et 114 sont aboutés au panneau central 110 par chacun des côtés du panneau central 110. Un panneau primaire 115, 116, 117 et 118 est respectivement abouté à chacun des panneaux primaires 111-114 par le côté opposé au côté par lequel le panneau primaire 111-114 considéré est abouté au panneau central 110. Les panneaux 110-114 forment ainsi une croix. Un panneau secondaire 301 à 316 est abouté de part et d'autre de chaque panneau primaire 111-114 par les côtés libres de ces panneaux de manière à former globalement une surface sensiblement continue. Des systèmes d'articulation 320 relient les différents panneaux entre eux. En l'occurrence, chaque panneau secondaire 301 à 316 est articulé avec l'un des panneaux primaires 111 à 114. Les systèmes d'articulation 320 sont par exemple du type des systèmes d'articulation primaires ou secondaires décrits précédemment. Des dispositifs de verrouillage 330 peuvent être prévus entre chaque couple de panneaux secondaires adjacents. Comme pour le réflecteur d'antenne représenté à la figure 9, les panneaux secondaires 301 à 316 ne sont pas articulés entre eux. Les dispositifs de verrouillage 330 permettent ainsi de supprimer un degré de liberté entre des panneaux non articulés entre eux.

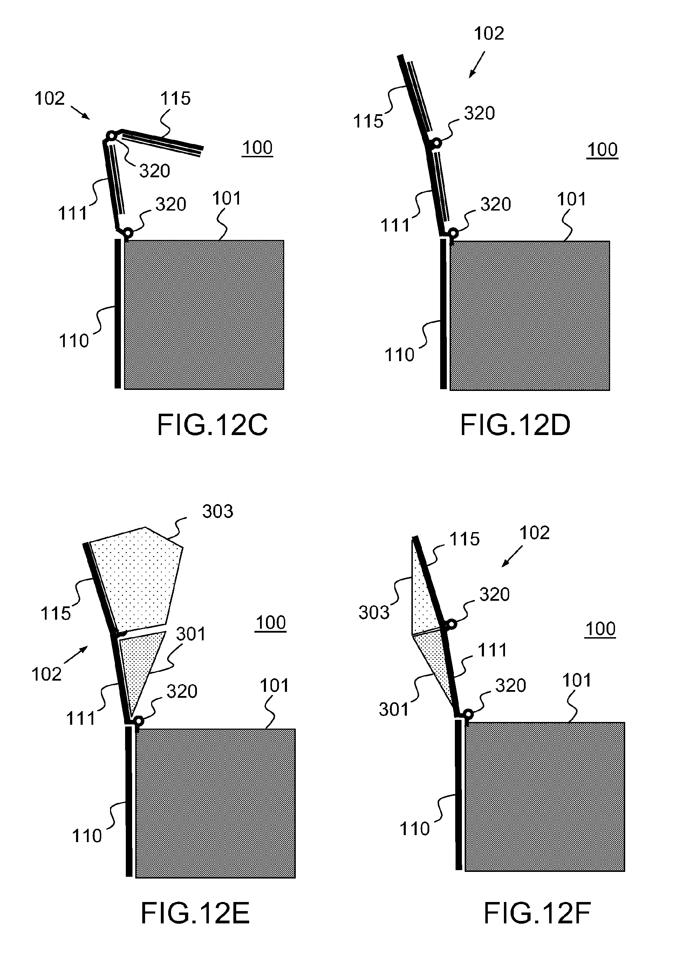

Les figures 12A à 12H illustrent un exemple de cinématique de déploiement d'une partie de l'écran thermique 102 représenté sur la figure 11. Sur la figure 12A, les panneaux primaires 111 et 115 et les panneaux secondaires 301 à 304 sont empilés parallèlement les uns aux autres contre une face de la caisse 101 du satellite 100. Sur la figure 12B, un premier système d'articulation 320 entraîne en rotation le panneau primaire 111 par rapport à la caisse 101. Sur la figure 13B, le panneau primaire 111 a atteint sa position correspondant à la configuration déployée. Un deuxième système d'articulation 320 entraîne en rotation le panneau primaire 112 par rapport au panneau primaire 111, jusqu'à atteindre la configuration déployée, représentée sur la figure 12D. Sur la figure 12E, des systèmes d'articulation, non représentée, entraînent en rotation les panneaux secondaires 301-304 par rapport au panneau primaire 111 ou 115 auquel ils sont aboutés, jusqu'à atteindre la configuration déployée, représentée sur la figure 12F. Dans le but d'éviter toute interférence dans le déploiement des panneaux, tous les panneaux reliés directement ou indirectement à l'un des côtés de la caisse 101 peuvent être déployés avant de déployer les panneaux reliés à un autre côté de la caisse 101.

## Revendications

1. Structure déployable pouvant équiper un engin spatial (10), **caractérisée en ce qu'**elle comporte :
▪ un ensemble de panneaux primaires (121-123),
▪ un ensemble de panneaux secondaires (124-129),
chaque panneau primaire et secondaire (121-129) comportant une surface avant (121A-129A) sensiblement plane,
▪ des systèmes d'articulation primaires (21, 22), chaque système d'articulation primaire permettant de faire pivoter un panneau primaire (121-123) par rapport à un autre selon un axe primaire (214, 224), les axes primaires étant sensiblement parallèles aux surfaces avant (121A-123A) des panneaux primaires (121-123), et
▪ des systèmes d'articulation secondaires (61, 62), chaque système d'articulation secondaire étant associé à un panneau secondaire (124-129) et permettant de faire pivoter ledit panneau secondaire par rapport à un panneau primaire (121-123) ou secondaire (124-129) selon un axe secondaire (611, 621) sensiblement parallèle aux surfaces avant (121A-129A) desdits panneaux (121-129),
**caractérisé en ce que**
la structure déployable (12) étant configurée de manière à ce que, dans une configuration déployée, les surfaces avant (121A-129A) des panneaux primaires et secondaires (121-129) forment globalement une surface (12A) sensiblement continue,
la structure déployable comportant, en outre, des dispositifs de verrouillage (130-133) à la périphérie de la surface globale (12A), chaque dispositif de verrouillage étant apte à supprimer au moins un degré de liberté entre deux panneaux secondaires adjacents (124-129) non articulés entre eux par un système d'articulation secondaire, de manière à rigidifier le réflecteur (12) dans la configuration déployée.

2. Structure déployable selon la revendication 1, dans laquelle les panneaux primaires et secondaires (121-129) comprennent un cadre rigide recouvert d'au moins un substrat flexible ou d'un panneau formant la surface avant (121A-129A).

3. Structure déployable selon l'une des revendications 1 et 2, dans laquelle les surfaces avant (121A-129A) des panneaux primaires et secondaires (121-129) sont des surfaces réfléchissantes.

4. Structure déployable selon l'une des revendications précédentes, dans laquelle chaque système d'articulation primaire (21, 22) relie l'un des panneaux primaires (121-123) avec un panneau primaire adjacent.

5. Structure déployable selon l'une des revendications précédentes, dans laquelle les systèmes d'articulation (21, 22, 61, 62) comportent des moyens pour entraîner les panneaux primaires et secondaires (121-129) dans la configuration déployée.

6. Structure déployable selon l'une des revendications précédentes, dans laquelle chaque panneau primaire et secondaire (121-129) comporte une surface arrière (121B-129B) sensiblement plane et parallèle à la surface avant (121A-129A) dudit panneau, les systèmes d'articulation (21, 22, 61, 62) étant fixés sur les surfaces arrière (121 B-129B) des panneaux (121-129).

7. Structure déployable selon la revendication 6, configurée de manière à ce que, dans une configuration de stockage, les panneaux primaires (121-123) soient enroulés autour d'eux-mêmes, la surface arrière (121 B-123B) de chaque panneau primaire (121-123) étant en vis-à-vis de la surface arrière d'un panneau primaire adjacent.

8. Structure déployable selon l'une des revendications 6 et 7, configurée de manière à ce que, dans une configuration de stockage, la surface arrière (124B-129B) de chaque panneau secondaire (124-129) soit en vis-à-vis de la surface arrière du panneau primaire ou secondaire (121-129) avec lequel il peut pivoter.

## Patentansprüche

1. Entfaltbare Struktur zur Ausrüstung eines Raumfahrzeugs (10), **dadurch gekennzeichnet, dass** sie aufweist:
▪ eine Einheit primärer Paneele (121-123),
▪ eine Einheit sekundärer Paneele (124-129), wobei jedes primäre und sekundäre Paneel (121-129) eine im Wesentlichenebene Vorderseite (121A-129A) aufweist,
▪ primäre Gelenksysteme (21, 22), wobei jedes primäre Gelenksystem erlaubt, ein primäres Paneel (121-123) im Verhältnis zu einem anderen gemäß einer primären Achse (214, 224) zu schwenken, wobei die primären Achsen zu den Vorderseiten (121A-123A) der primären Paneele (121-123) im Wesentlichenparallel sind, und
▪ sekundäre Gelenksysteme (61, 62), wobei jedes sekundäre Gelenksystem einem sekundären Paneel (124-129) zugeordnet ist und erlaubt, das sekundäre Paneel im Verhältnis zu einem primären (121-123) oder sekundären (124-129) Paneel gemäß einer zu den Vorderseiten (121A-129A) der Paneele (121-129) im Wesentlichen parallelen sekundären Achse (611, 621) zu schwenken,
**dadurch gekennzeichnet, dass**
die entfaltbare Struktur (12) derart konfiguriert ist, dass in einer entfalteten Konfiguration die Vorderseiten (121A-129A) der primären und sekundären Paneele (121-129) global eine im Wesentlichenkontinuierliche Fläche (12A) bilden,
die entfaltbare Struktur ferner Verriegelungsmittel (130-133) am Umfang der globalen Fläche (12A) aufweist, wobei jedes Verriegelungsmittel imstande ist, mindestens einen Freiheitsgrad zwischen zwei benachbarten sekundären, nicht durch ein sekundäres Gelenksystem aneinander angelenkten Paneelen (124-129) zu eliminieren, um den Reflektor (12) in der entfalteten Konfiguration zu versteifen.

2. Entfaltbare Struktur nach Anspruch 1, wobei die primären und sekundären Paneele (121-129) einen starren Rahmen umfassen, der mit mindestens einem flexiblen Substrat oder einem Paneel, das die Vorderseite (121A-129A) bildet, bedeckt ist.

3. Entfaltbare Struktur nach einem der Ansprüche 1 und 2, wobei die Vorderseiten (121A-129A) der primären und sekundären Paneele (121-129) reflektierende Flächen sind.

4. Entfaltbare Struktur nach einem der vorangehenden Ansprüche, wobei jedes primäre Gelenksystem (21, 22) eins der primären Paneele (121-123) mit einem benachbarten primären Paneel verbindet.

5. Entfaltbare Struktur nach einem der vorangehenden Ansprüche, wobei die Gelenksysteme (21, 22, 61, 62) Mittel aufweisen, um die primären und sekundären Paneele (121-129) in die entfaltete Konfiguration anzutreiben.

6. Entfaltbare Struktur nach einem der vorangehenden Ansprüche, wobei jedes primäre und sekundäre Paneel (121-129) eine Rückseite (121B-129B) aufweist, die im Wesentlicheneben und parallel zur Vorderseite (121A-129A) des Paneels ist, wobei die Gelenksysteme (21, 22, 61, 62) auf den Rückseiten (121B-129B) der Paneele (121-129) befestigt sind.

7. Entfaltbare Struktur nach Anspruch 6, die derart konfiguriert ist, dass in einer Lagerkonfiguration die primären Paneele (121-123) um sich selbst gewickelt sind, wobei die Rückseite (121B-123B) jedes primären Paneels (121-123) gegenüber der Rückseite eines benachbarten primären Paneels ist.

8. Entfaltbare Struktur nach einem der Ansprüche 6 und 7, die derart konfiguriert ist, dass in einer Lagerkonfiguration die Rückseite (124B-129B) jedes sekundären Paneels (124-129) gegenüber der Rückseite des primären oder sekundären Paneels (121-129) ist, mit dem es schwenken kann.

## Claims

1. A deployable structure that can equip a spacecraft (10), **characterised in that** it comprises:
▪ a set of primary panels (121-123);
▪ a set of secondary panels (124-129),each primary and secondary panel (124-129) comprising a substantially flat front surface (121A-129A);
▪ primary articulation systems (21, 22), each primary articulation system allowing a primary panel (121-123) to pivot relative to another panel along a primary axis (214, 224), said primary axes being substantially parallel to said front surfaces (121A-123A) of said primary panels (121-123); and
▪ secondary articulation systems (61, 62), each secondary articulation system being associated with a secondary panel (124-129) and allowing said secondary panel to pivot relative to a primary panel (121-123) or a secondary panel (124-129) along a secondary axis (611, 621) substantially parallel to said front surfaces (121A-129A) of said panels (121-129),
**characterised in that**
said deployable structure (12) is configured so that, in a deployed configuration, said front surfaces (121A-129A) of said primary and secondary panels (121-129) form a substantially continuous overall surface (12A),
said deployable structure further comprising locking devices (130-133) on the periphery of said overall surface (12A), each locking device being capable of removing at least one degree of freedom between two adjacent secondary panels (124-129) that are not articulated together by a secondary articulation system, so as to stiffen thereflector (12) in the deployed configuration.

2. The deployable structure according to claim 1, wherein said primary and secondary panels (121-129) comprise a rigid frame covered by at least one flexible substrate or by a panel forming said front surface (121A-129A).

3. The deployable structure according to one of claims 1 and2, wherein said front surfaces (121A-129A) of said primary and secondary panels (121-129) are reflective surfaces.

4. The deployable structure according to one of the preceding claims, wherein each primary articulation system (21, 22) connects one of said primary panels (121-123) to an adjacent primary panel.

5. The deployable structure according to one of the preceding claims, wherein said articulation systems (21, 22, 61, 62) comprise means for driving said primary and secondary panels (121-129) into the deployed configuration.

6. The deployable structure according to one of the preceding claims, wherein each primary and secondary panel (121-129) comprises a substantially flat rear surface (121B-129B) parallel to said front surface (121A-129A) of said panel, said articulation systems (21, 22, 61, 62) being fixed to said rear surfaces (121B-129B) of said panels (121-129).

7. The deployable structure according to claim 6, configured so that, in a stowed configuration, said primary panels (121-123) are wound about themselves, the rear surface (121B-123B) of each primary panel (121-123) being opposite the rear surface of an adjacent primary panel.

8. The deployable structure according to one of claims 6 and 7, configured so that, in a stowed configuration, the rear surface (124B-129B) of each secondary panel (124-129) is opposite the rear surface of said primary or secondary panel (121-129), with which it can pivot.
